Europäisches Patentamt

European Patent Office

Office européen des brevets

(19)

(11) Veröffentlichungsnummer: **0 010 748**
**A1**

# (12) EUROPÄISCHE PATENTANMELDUNG

(21) Anmeldenummer: 79104166.8

(22) Anmeldetag: 29.10.79

(51) Int. Cl.³: **G 01 G 19/00**

(30) Priorität: 03.11.78 DE 2847755

(43) Veröffentlichungstag der Anmeldung: **14.05.80**
**Patentblatt 80/10**

(84) Benannte Vertragsstaaten: **AT BE CH FR IT LU NL SE**

(71) Anmelder: **Sauer, Kuno, Fichtenweg 23, D-6603 Sulzbach (DE)**

(72) Erfinder: **Düppre, Theo, Am Stollen 73, D-6750 Kaiserslautern (DE)**

(74) Vertreter: **Selting, Günther, Dipl.-Ing. et al, Deichmannhaus, D-5000 Köln 1 (DE)**

(54) **Postwaage.**

(57) Bei einer Postwaage werden die von einer Gewichts-meßeinrichtung (20) ermittelten Werte in digitaler Form einem programmierbaren Festwertspeicher (27) zugeführt. Der Festwertspeicher (27) und der die digitalen Meßwerte liefernde Kodierer (23) sind mit der Anzeigeeinrichtung (24) über einen Multiplexer (26) verbunden, der alternativ das Ausgangssignal (25) des Kodierers (23) oder dasjenige des Festwertspeichers (27) an die Anzeigeeinrichtung (24) abgibt. An einer manuell betätigbaren Wähleinrichtung (28) sind unterschiedliche Portotarife einstellbar, die verschiedenen Adressengruppen des Festwertspeichers (27) entsprechen.

**EP 0 010 748 A1**

0010748

Kuno Sauer, Fichtenweg 23, 6603 Sulzbach

Postwaage

Die Erfindung betrifft eine Postwaage mit einer Gewichtsmeßeinrichtung, die über einen Kodierer mit einer digitalen
Anzeigeeinrichtung verbunden ist.

Zur Ermittlung der Portogebühr für Briefe, Päckchen usw.
ist es bekannt, Briefwaagen zu verwenden, die das Gewicht
der Postsendung anzeigen. In einer Tabelle muß anschließend
das Porto für die Beförderung nach dem entsprechenden Tarif
ermittelt werden. Die Tarife für normale Briefsendungen,
Einschreibsendungen, Drucksachen u.dgl. sind für die einzelnen Gewichtsklassen und Ländergruppen in der Tabelle
aufgeführt. Das Heraussuchen des richtigen Portobetrages
aus der Tabelle stellt eine erhebliche Fehlerquelle dar.
Bei Anwendung eines zu niedrigen Portobetrages kommt die
Postsendung zurück, wodurch erhöhte Kosten und Zeitverluste entstehen. Die Zahlung eines zu hohen Portobetrages
bedeutet eine unnötige Geldausgabe für den Absender. Bei
den üblichen analog arbeitenden Anzeigevorrichtungen, bei
denen ein Zeiger auf einer Anzeigeskala den Gewichtswert
angibt, treten darüber hinaus häufig Ablesefehler auf.

Zur Vermeidung derartiger Ablesefehler sind Postwaagen bekannt, die das Gewicht an einer Anzeigeeinrichtung in digitaler Form anzeigen. Eine solche Digitalanzeige hat darüber hinaus den Vorteil, daß in Zweifelsfällen klar ersichtlich ist, ob das Gewicht unterhalb oder oberhalb des Grenzwertes liegt, der zwei Tarifklassen voneinander trennt. Eine derartige Postwaage mit digitaler Gewichtsanzeige erspart jedoch nicht die manuelle Ermittlung des Portobetrages in der Portotabelle.

Aufgabe der Erfindung ist es, eine Postwaage der eingangs genannten Art zu schaffen, mit der Fehler, die durch die manuelle Ermittlung des Portobetrages entstehen, ausgeschaltet werden.

Zur Lösung dieser Aufgabe ist erfindungsgemäß vorgesehen, daß die von der Gewichtsmeßeinrichtung ermittelten Werte in digitaler Form einem programmierbaren Festwertspeicher zugeführt werden und daß der Kodierer und der Festwertspeicher mit der Anzeigeeinrichtung über einen Multiplexer verbunden sind, der alternativ das Ausgangssignal des Kodierers oder dasjenige des Festwertspeichers an die Anzeigeeinrichtung abgibt.

Der Festwertspeicher enthält die Werte der Portotabelle. Er wird mit den Ausgangssignalen der Gewichtsmeßeinrichtung angesteuert und gibt daraufhin den Portobetrag für das gemessene Gewicht an die Anzeigeeinrichtung ab. Der Benutzer kann also an der Anzeigeeinrichtung unmittelbar den Portobetrag in Mark und Pfennig ablesen.

Durch den Multiplexer wird erreicht, daß wahlweise das Gewicht oder der Portobetrag zur Anzeige gebracht werden können. Die Gewichtsanzeige erfolgt unter Umgehung des Festwertspeichers, in-dem die Gewichtsmeßeinrichtung über den Kodierer unmittelbar die Anzeigeeinrichtung steuert.

0010748

In vorteilhafter Weiterbildung der Erfindung kann der Festwertspeicher mit einer manuell betätigbaren Wähleinrichtung verbunden sein, an der unterschiedliche Portotarife einstellbar sind, die verschiedenen Adressengruppen des Festwertspeichers entsprechen. Der Festwertspeicher enthält also nicht nur für jede Gewichtsgruppe einen einzigen Portobetrag, sondern entsprechend den einzelnen Tarifarten mehrere Portobeträge. Der Benutzer kann an der Wähleinrichtung die betreffende Versandart, z.B. Luftpost, Einschreiben, Drucksache, und die Ländergruppe einstellen, so daß diese Faktoren bei der Anzeige des Portobetrages bereits berücksichtigt sind. Fehler können dabei nur insoweit auftreten, als an der Wähleinrichtung ein falscher Tarif eingestellt worden ist. Der Benutzer kann sich also auf die Einstellung des richtigen Tarifs konzentrieren. Den richtigen Portobetrag kann er dann unmittelbar an der Anzeigeeinrichtung ablesen.

Zweckmäßigerweise ist eine zusätzliche Informationsquelle vorgesehen, die eine an der Anzeigeeinrichtung anzuzeigende Information liefert und mit einem Eingang eines zweiten Multiplexers verbunden ist, und der Ausgang des ersten Multiplexers ist mit einem zweiten Eingang des zweiten Multiplexers verbunden, wobei der Ausgang des zweiten Multiplexers die Anzeigeeinrichtung steuert.

Ein Multiplexer ist in diesem Zusammenhang ein mehrkanaliger Schalter, der wahlweise eine von zwei mehrstelligen Eingangsinformationen auf den Ausgang durchschaltet. Die zusätzliche Informationsquelle kann beispielsweise eine Zeituhr sein, die Uhrzeit und/oder das Datum angibt. Diese Zusatzinformation kann an der Anzeigeeinrichtung ebenfalls angezeigt werden, wenn der Benutzer dies wünscht. Die Zusatzinformation braucht nicht notwendigerweise ausschließlich aus Zahlen zu bestehen. Es kann sich auch um eine alphanumerische Information handeln, wenn die Anzeigeeinrichtung für eine alphanumerische Anzeige geeignet ist.

Die Zusatzinformation wird zweckmäßigerweise immer dann zur Anzeige gebracht, wenn die Gewichtsmeßeinrichtung unbelastet ist. Normalerweise würde die Anzeigeeinrichtung in diesem Fall stets den Wert Null anzeigen, der für den Benutzer nicht von Interesse ist. Um diese uninteressante Angabe des Null-Gewichts durch eine sinnvollere Anzeige zu ersetzen, kann in vorteilhafter Weiterbildung der Erfindung der zweite Multiplexer von einem Sensor gesteuert sein, der eine Belastung der Gewichtsmeßeinrichtung feststellt und im unbelasteten Zustand den Ausgang der zusätzlichen Informationsquelle und im belasteten Zustand den Ausgang des ersten Multiplexers auf die Anzeigeeinrichtung durchschaltet. Der Sensor kann beispielsweise ein an den Gewichtsdetektor angeschlossener Null-Detektor sein, der nur dann ein Signal abgibt, wenn der Ausgangswert der Gewichtsmeßeinrichtung "Null" ist. Das Signal des Gewichtsdetektors steuert den zweiten Multiplexer in dem Sinne, daß das Gewicht bzw. das entsprechende Porto nur dann angezeigt wird, wenn es von Null verschieden ist. Alternativ kann der Sensor auch aus einer Lichtschranke bestehen, die das Vorhandensein eines Gegenstandes an der Gewichtsmeßeinrichtung feststellt.

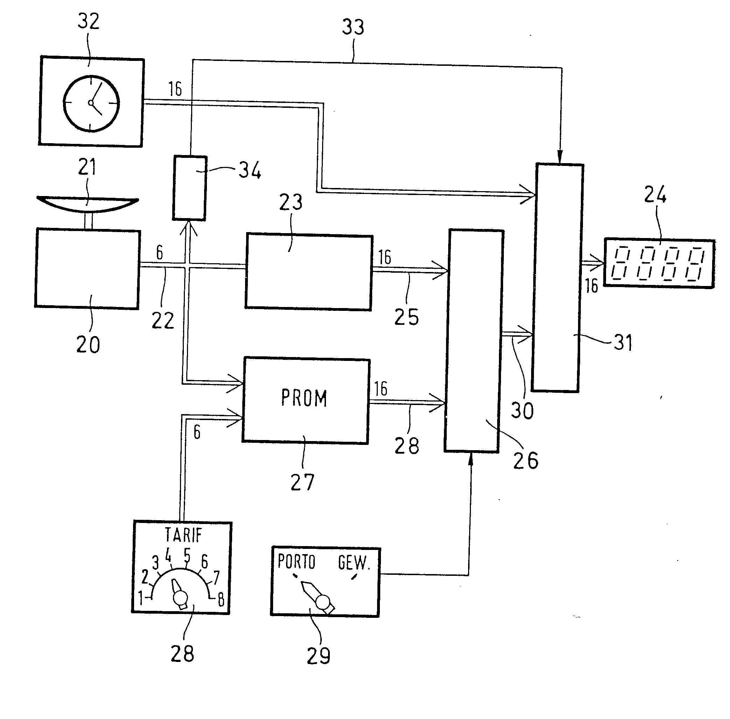

Im folgenden wird unter Bezugnahme auf die einzige Figur der Zeichnung ein Ausführungsbeispiel der Erfindung näher erläutert.

In der Zeichnung ist ein Blockschaltbild der Portowaage schematisch dargestellt.

Die durch Doppelstriche angedeuteten Leitungen bezeichnen jeweils ein Leitungs- oder Kanalbündel, auf dem eine mehrstellige Binärinformation übermittelt wird. Die Anzahl der Leitungen bzw. Kanäle ist jeweils durch die Zahlen 6 bzw. 16 angegeben.

Die Gewichtsmeßeinrichtung 20 weist eine Waagschale oder Waagplatte 21 auf, auf die die zu wiegende Postsache gelegt wird. Die Gewichtsmeßeinrichtung 20 kann einen Kraftmeßfühler enthalten, der das Gewicht in analoge elektrische Signale umwandelt, oder einen Weggeber, der das Absenken der Waagschale 21 feststellt und in analoge elektrische Signale umwandelt. Die Analogsignale werden bei dem vorliegenden Ausführungsbeispiel innerhalb der Gewichtsmeßeinrichtung 20, die einen Digital/Analog-Umsetzer enthält, in Digitalsignale umgesetzt. Diese Digitalsignale werden im Gray-Kode an den Ausgangsleitungen 22 ausgegeben und einem Kodewandler 23 zugeführt, der die im Gray-Kode anstehenden Signale in Signale nach dem BCD-Kode umsetzt. Da die Anzeigeeinrichtung 24 bei dem vorliegenden Ausführungsbeispiel vier Ziffernstellen aufweist und für jede Ziffernstelle vier Bits benötigt werden, weist der Kodewandler 23 insgesamt 16 Ausgangsleitungen 25 auf, von denen jeweils vier Ausgangsleitungen den Wert einer Ziffer bestimmen. Die Ausgangsleitungen 25 führen an den ersten Eingang des ersten Multiplexers 26.

Die Ausgangssignale des Leitungsbündels 22 werden ferner einem programmierbaren Festwertspeicher 27 (PROM) zugeführt. Der Festwertspeicher 27 enthält in einer Anzahl von aufrufbaren Speicheradressen die einzelnen Portobeträge für die verschiedenen Gewichtsklassen nach Tarifen geordnet. An einem Wählschalter 28 mit 6-stelligem Ausgang, der mit dem Adresseneingang des Festwertspeichers 27 verbunden ist, kann die betreffende Tarifart eingestellt werden, während das Gewicht bzw. die Gewichtsklasse weiteren Adresseneingängen des Festwertspeichers 27 zugeführt wird. Bei einer Tarifänderung muß der Festwertspeicher 27 entweder ausgewechselt oder neu programmiert werden.

Der Festwertspeicher 27 gibt in Abhängigkeit vom gemessenen Gewicht oder Gewichtsraster und vom eingestellten Tarif an seinem Ausgang 28 den Portobetrag im BCD-Kode aus. Da die Portoangabe ebenfalls 4-stellig erfolgt, hat der Ausgang 28 16 Leitungen (vier für jede Ziffer). Der Ausgang 28 ist mit dem zweiten Eingang des Multiplexers 26 verbunden.

Der Multiplexer 26 ist ein mehrkanaliger Schalter, der in Abhängigkeit von der Stellung eines Wählschalters 29 entweder die Signale des Leitungsbündels 25 oder die Signale des Leitungsbündels 28 auf seinen Ausgang 30 durchschaltet. Wenn der Wählschalter 29 auf "Porto" steht, stehen am Ausgang 30 also die 16 Binärsignale an, die den Portobetrag darstellen. Wenn der Wählschalter 29 auf "Gewicht" steht, stehen am Ausgang 30 diejenigen 16 Binärsignale an, die das Gewicht der Postsache darstellen.

Der Ausgang 30 des ersten Multiplexers 26 ist mit einem Eingang eines zweiten Multiplexers 31 verbunden, der eine ähnliche Funktion hat wie der erste Multiplexer 26. Auch bei dem zweiten Multiplexer 31 handelt es sich um einen mehrkanaligen Schalter. An dem zweiten Eingang des Multiplexers 31 liegt das 16-stellige Ausgangssignal einer zusätzlichen Informationsquelle 32, bei der es sich im vorliegenden Fall um eine Zeituhr mit digitaler Zeitausgabe handelt.

Der zweite Multiplexer 31 wird über eine Leitung 33 von einem Nullwert-Detektor 34 gesteuert. Dem Nullwert-Detektor 34 werden die Ausgangssignale 22 der Gewichtsmeßeinrichtung 20 zugeführt.

Wenn die Gewichtsmeßeinrichtung 20 unbelastet ist, besteht das Ausgangssignal 22 aus sechs Nullen. Der Nullwert-Detektor 34 erkennt das Vorhandensein von sechs Nullen und gibt daraufhin über Leitung 33 ein Signal an den zweiten Multiplexer 31, durch das der Ausgang der Zeituhr 32 auf den Eingang der Anzeigeeinrichtung 24 durchgeschaltet wird. Wenn die Gewichtsmeßeinrichtung 20 unbelastet ist, wird also die Uhrzeit in digitaler Form zur Anzeige gebracht. Eventuell kann in bekannter Weise in bestimmten Zeitabständen eine Datumseinblendung erfolgen.

Wenn das zu messende Gewicht von Null abweicht, schaltet der zweite Multiplexer 31 die Signale seines Eingangs 30 auf die Anzeigeeinrichtung 24 durch. In Abhängigkeit von der Stellung des Wählschalters 29 wird damit endweder das an dem Leitungsbündel 25 anstehende Gewicht oder der an dem Leitungsbündel 28 anstehende Portobetrag zur Anzeige gebracht.

**VON KREISLER   SCHÖNWALD   MEYER   EISHOLD**

**FUES   VON KREISLER   KELLER   SELTING**

0010748

PATENTANWÄLTE

Dr.-Ing. von Kreisler † 1973
Dr.-Ing. K. Schönwald, Köln
Dr.-Ing. Th. Meyer, Köln
Dr.-Ing. K. W. Eishold, Bad Soden
Dr. J. F. Fues, Köln
Dipl.-Chem. Alek von Kreisler, Köln
Dipl.-Chem. Carola Keller, Köln
Dipl.-Ing. G. Selting, Köln

Anmelder

Kuno Sauer

Fichtenweg 23

6603 Sulzbach

Sg/En
**5 KÖLN 1** 19. Oktober 1978
DEICHMANNHAUS AM HAUPTBAHNHOF

- 8 -

A n s p r ü c h e

1. Postwaage mit einer Gewichtsmeßeinrichtung, die über einen Kodierer mit einer digitalen Anzeigeeinrichtung verbunden ist, d a d u r c h  g e k e n n z e i c h n e t, daß die von der Gewichtsmeßeinrichtung (20) ermittelten Werte in digitaler Form einem programmierbaren Festwertspeicher (27) zugeführt werden und daß der Kodierer (23) und der Festwertspeicher (27) mit der Anzeigeeinrichtung (24) über einen Multiplexer (26) verbunden sind, der alternativ das Ausgangssignal (25) des Kodierers (23) oder dasjenige des Festwertspeichers (27) an die Anzeigeeinrichtung (24) abgibt.

2. Postwaage nach Anspruch 1, dadurch gekennzeichnet, daß der Festwertspeicher (27) mit einer manuell betätigbaren Wähleinrichtung (28) verbunden ist, an der unterschiedliche Portotarife einstellbar sind, die verschiedenen Adressengruppen des Festwertspeichers entsprechen.

Telefon: (0221) 13 10 41 · Telex: 888 2307 dopa d · Telegramm: Dompatent Köln

3. Postwaage nach Anspruch 1 oder 2, dadurch gekennzeichnet, daß eine zusätzliche Informationsquelle (32) vorgesehen ist, die eine an der Anzeigeeinrichtung (24) anzuzeigende Information liefert und mit einem Eingang eines zweiten Multiplexers (31) verbunden ist, daß der Ausgang (30) des ersten Multiplexers (26) mit einem zweiten Eingang des zweiten Multiplexers (31) verbunden ist und daß der Ausgang des zweiten Multiplexers die Anzeigeeinrichtung (24) steuert.

4. Postwaage nach Anspruch 3, dadurch gekennzeichnet, daß der zweite Multiplexer (31) von einem Sensor (34) gesteuert ist, der eine Belastung der Gewichtsmeßeinrichtung (20) feststellt und im unbelasteten Zustand den Ausgang der zusätzlichen Informationsquelle (32) und im belasteten Zustand den Ausgang (30) des ersten Multiplexers (26) auf die Anzeigeeinrichtung (24) durchschaltet.

5. Postwaage nach Anspruch 4, dadurch gekennzeichnet, daß der Sensor ein an die Gewichtsmeßeinrichtung (20) angeschlossener Nullwert-Detektor (34) ist.

6. Postwaage nach Anspruch 4, dadurch gekennzeichnet, daß der Sensor aus einer Lichtschranke besteht.

7. Postwaage nach Anspruch 3, dadurch gekennzeichnet, daß die zusätzliche Informationsquelle (32) eine Digitaluhr mit binärer Uhrzeitausgabe ist.

Europäisches
Patentamt

**EUROPÄISCHER RECHERCHENBERICHT**

0010748

Nummer der Anmeldung

EP 79 10 4166

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 4 051 913 (D. GUDEA) <br><br> * Figuren 1,2; Spalte 6, Zeilen 5-65; Spalte 7, Zeilen 24-44; Spalte 12, Zeilen 39-49 * <br><br> -- | 1,2 |
|  | DE - A - 2 750 865 (PITNEY-BOWES Inc.) <br><br> * Figuren 1,2,6; Seite 20, Abschnitte 2 und 3 * <br><br> -- | 1,3,4, 6 |
|  | CH - A - 595 618 (WIRTH, GALLO & CO.) <br><br> * Figuren 1-3; Spalte 1, Zeilen 45-68; Spalte 2, Zeilen 42-58 * <br><br> -- | 1 |
|  | US - A - 3 580 421 (J.H. BICKFORD) <br><br> * Figur 1 ; Zusammenfassung * <br><br> -- | 1 |
|  | FR - A - 2 289 895 (TIMI VAAKA-NYHOLM) <br><br> * Anspruch 1 * <br><br> -- | 1 |
| A | US - A - 3 937 287 (E.G. PRYOR et al.) <br><br> * Figur 1 * <br><br> -- | 1 |
| A | FR - A - 2 336 669 (HOBART CORP.) <br><br> * Figuren 1,2; Anspruch 1 * <br><br> -- <br><br> ./. | 1 |

**KLASSIFIKATION DER ANMELDUNG (Int.Cl. 3)**

G 01 G 19/00

**RECHERCHIERTE SACHGEBIETE (Int. Cl. 3)**

G 01 G 19/00
19/413

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 06-02-1980 | THIBO |

EPA form 1503.1  06.78

Europäisches
Patentamt

**EUROPÄISCHER RECHERCHENBERICHT**

| | EINSCHLÄGIGE DOKUMENTE | | | KLASSIFIKATION DER ANMELDUNG (Int.Cl. ³) |
|---|---|---|---|---|
| Kategorie | Kennzeichnung des Dokuments mit Angabe, soweit erforderlich, der maßgeblichen Teile | | betrifft Anspruch | |
| A | US - A - 3 635 297 (R.F. SALAWA)<br>* Figuren 2,3,8 *<br><br>---- | | 1 | |
| | | | | **RECHERCHIERTE SACHGEBIETE (Int. Cl. ³)** |